# EUROPÄISCHE PATENTSCHRIFT

(11) **EP 3 861 850 B1**
(45) Veröffentlichungstag und Bekanntmachung des Hinweises auf die Patenterteilung: **01.10.2025**
(21) Anmeldenummer: 21156026.3
(22) Anmeldetag: 09.02.2021
(51) Int. Cl.: A01D 61/02, F16G 1/06, F16G 1/28, A01F 15/18, B29D 29/00, B29D 29/08, B65G 15/34, B65G 15/52

(54) **FLACHRIEMEN UND VERFAHREN ZU DESSEN HERSTELLUNG**
FLAT BELT AND METHOD FOR ITS MANUFACTURE
COURROIE PLATE ET SON PROCÉDÉ DE FABRICATION

(30) Priorität: 10.02.2020 DE 102020103294
(43) Veröffentlichungstag der Anmeldung: 11.08.2021
(73) Patentinhaber: Arntz Beteiligungs GmbH & Co. KG, 37671 Höxter (DE)
(72) Erfinder: SCHAPER, Marcel, 37619 Kirchbrak (DE)
(74) Vertreter: Kröncke, Rolf

(56) Entgegenhaltungen:
- WO-A1-2018/050301
- DE-B4- 102009 036 104
- DE-T5- 112015 000 769
- US-A- 4 329 192
- US-A- 4 697 693
- US-A- 5 860 883

## Beschreibung

In einem ersten Aspekt richtet sich die vorliegende Erfindung auf einen Flachriemen als endloses Zugmittel geeignet für Förderbänder, wobei der Flachriemen keine Gewebeeinlage im Kraftübertragungsbereich und ggf. keine Gewebeeinlage im Rücken des Riemens aufweist. In einem weiteren Aspekt wird ein Verfahren zur Herstellung eines Flachriemens als endloses Zugmittel bereitgestellt. Dieses Verfahren ist ein mehrstufiges Verfahren beinhaltend die Schritte des Ausbildens eines Flachriemens mit einem Grundkörper und darin vorliegendem endlosen Zugträgerelements mittels Rotationsvulkanisationsverfahren und dem anschließenden Ausformen zumindest eines Teils des Kraftübertragungsbereiches an dem durch Rotationsvulkanisationsverfahren erhaltenen Flachriemen. Darüber hinaus werden Antriebsmittel für Förderbänder umfassend einen erfindungsgemäßen Flachriemen bereitgestellt sowie Landwirtschaftsmaschinen mit einer zum Fördern von landwirtschaftlichem Erntegut eingerichteten Fördereinrichtung mit erfindungsgemäßen Flachriemen bzw. Förderband.

### Stand der Technik

Flachriemen, die insbesondere im landwirtschaftlichen Bereich in Erntemaschinen, z. B. zum Pressen von landwirtschaftlichem Erntegut eingesetzt werden, wie etwa Heu oder Stroh, sind großen Belastungen ausgesetzt. Flachriemen dienen als Antriebsmittel von Förderbändern in derartigen Maschinen, z. B. in Form von Stabelevatoren, mit welchen das Erntegut gefördert und zu Ballenform verdichtet wird.

Dabei sind diese Riemen hohen Kräften ausgesetzt, um z. B. die notwendigen Kräfte zur Verdichtung von Pressgut aufzunehmen.

Um eine ausreichende Dauerfestigkeit dieser Flachriemen zu ermöglichen werden derzeit mehrere Gewebelagen eingesetzt. So beschreibt die DE 10 2009 036 104 B4 einen Schrägförderer für Mähdrescher, wobei endlose Zugmittel in Form von Riemen aus gewebelagenverstärkten vernetztem Polymer verwendet werden. Dabei werden mindestens zwei Gewebelagen mit dazwischen angeordneten Gummischichten eingesetzt. In Weiterentwicklung dieser Flachriemen wurden zusätzlich Zugträger aus unterschiedlichen Materialien, insbesondere aber aus polymeren Material wie etwa Polyamid, Polyester oder aber Aramid Cord, zwischen den Gewebelagen eingebracht, um die entsprechenden Zugkräfte aufnehmen zu können und die Dauerfestigkeit zu verbessern. Entsprechende Riemen als endloses Zugmittel für Förderbänder sind in der DE 10 2016 112 301 A1 und der DE 10 2016 112 305 A1 beschrieben. Dabei wird eine Kombination von Gewebe und Zugträgern eingesetzt, wobei die Zugträger einerseits aus Stahl und andererseits aus polymeren Material wie Polyester, Polyamid, Kevlar oder aus Kunststofffasern bestehen können. Sowohl das Zugträgermaterial als auch das Gewebe sind dabei üblicherweise in einem Werkstoff aus einem polymeren Material, wie etwa Chloropren oder Styrol-Butadien-Kautschuk, eingebunden.

Diese beschriebenen Flachriemen zum Einsatz bei Förderbändern landwirtschaftlicher Maschinen erfordern große Riemenlängen, wie Riemenlängen von mindestens 4 Metern. Entsprechend gestaltet sich die Herstellung dieser Flachriemen schwierig. Bedingt durch die benötigten Riemenlängen werden solche Riemen gemäß dem Stand der Technik üblicherweise durch abschnittsweise Vulkanisation in einer Vulkanisierpresse gefertigt. Die Riemen werden entweder als Endlosriemen hergestellt oder aber, alternativ, werden die Riemen mittels Schlössern verbunden, weiterhin gibt es die Möglichkeit, dass die Riemen überlappt und endlos vulkanisiert oder insgesamt endlos gewickelt werden. Sowohl endlos gewickelte als auch mit Schlössern versehene Riemen haben Vor- und Nachteile. Zur Überwindung dieser schlägt die EP 3 438 024 A1 Stabbänder vor, die Hilfsriemenabschnitte aufweisen, wobei diese Hilfsriemenabschnitte angeordnet sind in dem Bereich der Stoßstellen zwischen den Riemenenden.

Die WO 2018/050301 A1 beschreibt elastische Zugmittel und Verfahren zur Herstellung derselben. Aus der DE 11 2025 000 769 T5 ist ein Verfahren zum Herstellen eines Übertragungsriemens und ein Übertragungsriemen bekannt.

Wie dargestellt, stellt ein weiteres Problem die Herstellung dieser Riemen mit den benötigten Riemenlängen dar. Im Stand der Technik ist die abschnittsweise Vulkanisation in einer Vulkanisierpresse beschrieben. Die für derartige Herstellungsverfahren benötigten, sehr hohen Schließdrucke der Vulkanisierpresse sorgen in derartigen Verfahren dafür, dass bei der Erzeugung des Riemenprofils unvulkanisiertes und teilvulkanisiertes Material aus der durch die beiden Vulkanisierungsplatten der Presse gebildeten Vulkanisierkammer ausgetrieben wird.

Ein weiteres Problem der abschnittsweisen Vulkanisation ist, dass sich durch die abschnittsweise auftretenden Scherkräfte die Zugträger sich verlagern können und somit die Dauerfestigkeit der Riemen verschlechtert. Es wird vorgeschlagen, dass durch Verbindung mit Gewebe deren Lage stabilisiert wird, tatsächlich findet aber durch die abschnittsweise Vulkanisation in den Randbereichen der einzelnen vulkanisierten Abschnitte eine Verlagerung des Cords und der darin vorhandenen Zugträger statt. Diese Bereiche stellen potentielle Schwachstellen dieser Flachriemen dar.

Ein weiterer Nachteil des Einsatzes von Gewebe in solchen Flachriemen besteht darin, dass dieses eine Inhomogenität in dem aus polymeren Werkstoff bestehenden Riemenkörper darstellt. Die Verbindung Gewebe-Polymer ist im Allgemeinen schwächer als der Materialzusammenhalt im Polymer. Dies zeigt sich deutlich bei Scherversuchen, bei welchen die Trennung des Materialverbundes immer zwischen Polymer und Gewebe auftritt.

Die Riemen des Standes der Technik leiden entsprechend unter verminderter Dauerfestigkeit und insbesondere einem Trennen der Materialien.

### Beschreibung der Erfindung

Aufgabe der vorliegenden Erfindung ist die Bereitstellung von Flachriemen, die die obigen Nachteile überwinden und insbesondere von Herstellungsverfahren für diese Flachriemen mit verbesserter Dauerfestigkeit und verbesserter Beständigkeit des Materials ohne Trennung dieser.

Diese Aufgabe wird erfindungsgemäß mit einem Flachriemen als endloses Zugmittel gelöst, welches die Merkmale des Anspruchs 1 aufweist. Darüber hinaus wird ein Verfahren zur Herstellung eines solchen Flachriemens als endloses Zugmittel bereitgestellt mit den Schritten gemäß Anspruch 7. Schließlich werden Antriebsmittel für Förderbänder umfassend erfindungsgemäße Flachriemen gemäß Anspruch 14 und Landwirtschaftsmaschinen diese aufweisend bereitgestellt.

In einem ersten Aspekt betrifft die vorliegende Erfindung einen Flachriemen, nämlich einen Flachriemen als endloses Zugmittel, geeignet für Förderbänder, insbesondere in landwirtschaftlichen Maschinen, wobei der Flachriemen als Endlosriemen mit einer Riemenlänge von mindestens 3 m, wie mindestens 3,5 m, insbesondere mindestens 4 m ausgebildet ist, wobei der Flachriemen einen Grundkörper hat und dieser Grundkörper ein Endloszugträgerelement, ausgebildet aus einer Vielzahl von in Laufrichtung des Flachriemens zugkraftübertragender Zugträger aufweist, dadurch gekennzeichnet, dass der Flachriemen keine Gewebeeinlage im Kraftübertragungsbereich hat und gegebenenfalls weiterhin keine Gewebeeinlage im Rücken des Riemens aufweist und/oder gegebenenfalls keine Gewebeauflage in der Basis aufweist.

Dieser Flachriemen als endloses Zugmittel eignet sich für Förderbänder eingangs genannter Art. Diese Förderbänder finden insbesondere Einsatz als Stabelevatoren in landwirtschaftlichen Maschinen, z. B. zur Förderung und Verdichtung von Erntegut.

Der erfindungsgemäße Flachriemen weist als Endlosriemen eine Riemenlänge von mindestens 3 Metern, wie mindestens 3,5 Meter, auf. In einer Ausführungsform ist der Flachriemen als Endlosriemen einer der eine Riemenlänge von mindestens 4 Metern aufweist.

Der erfindungsgemäße Flachriemen zeichnet sich dadurch aus, dass keine Gewebeeinlage im Kraftübertragungsbereich vorliegt. Insbesondere ist der Flachriemen einer, der keine Gewebeeinlage sowohl im Kraftübertragungsbereich als auch im Rücken des Riemens aufweist. Darüber hinaus ist eine Ausführungsform, dass keine Gewebeeinlage in der Basis vorliegt. In einer Ausführungsform ist der Riemen einer, der keine Gewebeeinlage im gesamten Riemenkörper aufweist.

In einer Ausführungsform ist der Flachriemen einer, wobei die Zugträger ausgebildet sind aus Polyamid, Polyester, Carbon und/oder Aramid. Die Zugträger können allgemein aus Kunststoff oder Stahl aufgebaut sein, aber auch aus Carbon oder Basalt. Die wesentlichen Werkstofftypen sind: Stahl, Polyamid, Aramid, Polyesther, Carbon, Glas und/oder Basalt, Polyetheretherketon, Polyethylen, Polyethylenterephthalat, Polybenzoxazol oder Polyethylen-2,6-Naphthalat.

In einer Ausführungsform sind die Zugträger dabei beschichtet, um eine bessere Anbindung an die Elastomere des Grundkörpers zu ermöglichen. Geeignete Beschichtungen oder Ummantelungen dieser Zugträger sind dem Fachmann bekannt. Typisches Beschichtungen oder Ummantelungen bestehen aus Resorcinol Formaldehyde Latex (RFL).

In einer Ausführungsform ist der Grundkörper des Riemenkörpers gebildet aus oder umfasst Naturkautschuk, Chloropren-Kautschuk, Styrol-Butadien-Kautschuk, Ethylen-Propylenterpolymer(dien)-Kautschuk, alkyliertes chlorsulfoniertes Polyethylen oder hydrierter Acrylnitrilbutadien-Kautschuk.

Dem Fachmann sind entsprechend geeignete Elastomermischungen bekannt. Insbesondere Natur- und Synthesekautschuk die entsprechend vulkanisiert werden können.

In einer Ausführungsform sind die Flachriemen als Keilriemen ausgebildet. Alternativ ist der Flachriemen als Zahnriemen ausgebildet. Der Flachriemen als endloses Zugmittel kann aber jede Form annehmen.

In einer weiteren Ausführungsform kann die Profilierung einseitig oder beidseitig sein. Dieses gilt für Riemen erhältlich mit den beiden hierin beschriebenen Verfahren also sowohl für materialabtragende als auch materialaufbringende Verfahren.

In einer Ausführungsform ist der erfindungsgemäße Flachriemen einer, wobei mindestens ein Teil des Kraftübertragungsbereiches des Flachriemens nach Vulkanisierung des Grundkörpers durch Aufvulkanisieren oder Aufkleben von in getrennten Verfahren hergestellter Riemenverzahnung vorliegt.

Das heißt, erfindungsgemäß kann die Ausgestaltung des Flachriemens über zwei Wege erfolgen. Einerseits kann der Riemen mit geringster Dicke des fertigen Flachriemen erzeugt werden - auch als Flachriemen flach bezeichnet - und anschließend findet ein Aufvulkanisieren oder Aufkleben von in getrennten Verfahren hergestellter Riemenverzahnung für den Kraftübertragungsbereich statt. Alternativ ist der Flachriemen einer, der in einem ersten Schritt als Vollriemen hergestellt wurde, d. h., als Riemen mit maximaler Dicke - auch als Flachriemen hoch bezeichnet -, und anschließend nach Vulkanisierung dieses Flachriemens mit maximaler Dicke durch ein materialabtragendes Verfahren der Kraftübertragungsbereich ausgebildet wird. Die finale Profilierung des Flachriemens erfolgt also nach einer Vulkanisierung des Flachriemens entweder durch materialaufbringende oder materialabtragende Verfahren. Der erfindungsgemäße Flachriemen wird also in mindestens zwei Arbeitsschritten hergestellt, um die finale Profilierung dieses Flachriemens zu erhalten.

Dem Fachmann sind geeignete Verfahren bekannt, um in der Alternative der Herstellung des Flachriemens mit einer Fertigriemenhöhe abzüglich der Verzahnungshöhe oder mindestens abzüglich eines Teils der Verzahnungshöhe bereitzustellen. Ebenso sind dem Fachmann geeignete Verfahren zur Aufvulkanisation oder Aufkleben der in einem separaten Prozess hergestellten Riemenverzahnung bekannt.

Die in der alternativen Ausführungsform vorgesehene Profilierung durch Materialabtragung ist ebenfalls ein bekanntes Verfahren. Dabei wird der im ersten Prozessschritt erzeugte Flachriemen mit einer Höhe entsprechend dem fertigen Endprodukt produziert. Anschließend wird zur Ausbildung des Kraftübertragungsbereiches ein nachgelagertes Materialabtragungsverfahren durchgeführt.

Durch diese Herstellungsverfahren ist es möglich, die Materialbindung im Riemen zu verbessern und die Zugfestigkeit und die Langlebigkeit des Materials zu erhöhen.

In einer Ausführungsform weist der erfindungsgemäße Flachriemen weiterhin Befestigungslöcher für Funktionselemente auf. Insbesondere bei Einsatz des Flachriemens als endloses Zugmittel in Förderbändern können quer zur Laufrichtung und parallel zueinander Stäbe angeordnet werden, um Stabbänder für Stabbandförderer, insbesondere in landwirtschaftlichen Maschinen, bereitzustellen. D. h., im Riemen liegen Befestigungslöcher für Funktionselemente vor, wobei diese Befestigungslöcher nach Vulkanisierung eingebracht werden, z. B. in Form von Distanzhüllen, um entsprechende Stabhalter, z. B. durch Verschrauben, zu fixieren. Diese Distanzhüllen als Befestigungslöcher werden z. B. durch Stanzen eingebracht. Dabei werden diese Befestigungslöcher möglichst derart angeordnet, dass die im Flachriemen vorliegenden Zugträger wenig oder nicht geschädigt sind und die Anordnung der Zugträger nicht beeinträchtigt ist. Ein entsprechendes Stanzen möglichst ohne Beschädigung der Zugträger zur Herstellung dieser Befestigungslöcher mit Distanzhülsen ist bevorzugt.

In einem weiteren Aspekt richtet sich die vorliegende Erfindung auf ein Verfahren zum Herstellen eines erfindungsgemäßen Flachriemens als endloses Zugmittel, wobei der Endlosriemen eine Riemenlänge von mindestens 3 Metern, wie 3,5 Meter, insbesondere mindestens 4 Meter, aufweist. Das erfindungsgemäße Verfahren umfasst dabei ein mehrstufiges Verfahren mit den Schritten:
a) Des Ausbildens eines Flachriemens mit einem Grundkörper und darin vorliegendem Endloszugträgerelements mittels Rotationsvulkanisationsverfahrens;
b) Ausformen zumindest eines Teils des Kraftübertragungsbereiches an dem durch Rotationsvulkanisationsverfahren gemäß Schritt a) erhaltenen Flachriemen.

Wie oben bereits ausgeführt kann dieses Ausformen ein materialauftragendes oder ein materialabtragendes Verfahren sein. In einem ersten Aspekt ist das Ausformen zumindest eines Kraftübertragungsbereiches eines durch Ausformen des ersten Kraftschlussprofils durch Aufvulkanisation oder Aufkleben von einem in einem separaten Prozess hergestellten Vulkanisats, z. B. in Form einer Riemenverzahnung, im Bereich des zu erzeugenden Kraftübertragungsbereiches. Die im separaten Prozess hergestellten Vulkanisate, z. B. in Form einer Riemenverzahnung, werden auf den Flachriemen, der in seiner Riemenhöhe der geringsten Höhe des fertigen Flachriemens entspricht abzüglich der Verzahnungshöhe, aufvulkanisiert oder aufgeklebt. Entsprechende Verfahren sind dem Fachmann bekannt.

In der alternativen Ausführungsform des Ausformens von zumindest einem Teil des Kraftübertragungsbereiches an dem durch das Rotationsvulkanisationsverfahren erhaltenen Flachriemens ist ein materialabtragendes Verfahren des Vulkanisats zur Ausbildung eines ersten Kraftschlussprofils eines Kraftübertragungsbereiches. Bei entsprechender Ausbildung von Riemenverzahnungen werden diese Bereiche z. B. durch Fräsen, Schneiden oder Schleifen abgetragen. Das heißt, dass in dieser Ausführungsform des erfindungsgemäßen Verfahrens der Flachriemen im Rotationsvulkanisationsverfahren mit einer Endhöhe des fertigen Endproduktes, dem Flachriemen als endloses Zugmittel, hergestellt wird. Die Kraftschlussprofile des Kraftübertragungsbereiches werden materialabtragend ausgebildet.

In dem erfindungsgemäßen Verfahren ist das erste Kraftschlussprofil eines, zum Aufnehmen der Antriebskraft einer Antriebseinrichtung, wobei diese Antriebseinrichtung ein zweites Kraftschlussprofil aufweist, das zum kraftschlüssigen Ausüben der Antriebskraft auf das erste Kraftschlussprofil eingerichtet ist.

Das erfindungsgemäße Verfahren kann weiterhin das Einbringen der Befestigungslöcher, z. B. in Form von Distanzhülsen, beinhalten. Diese Befestigungslöcher eignen sich zur Befestigung von Funktionselementen an den Flachriemen. Die Befestigungslöcher, z. B. ausgebildet als Distanzhüllen, werden dabei so in den Flachriemen eingebracht, dass die Zugträger im Flachriemen möglichst unbeschädigt bleiben. Die Befestigungslöcher können z. B. durch Stanzen hergestellt werden.

In einem weiteren Aspekt richtet sich die vorliegende Anmeldung auf Antriebsmittel für Förderbänder, umfassend mindestens einen erfindungsgemäßen Flachriemen und in Querzulaufrichtung des mindestens einen Flachriemens, parallel zueinander angeordnete Stäbe mit gelochten Befestigungsbereichen, wobei diese Befestigungsbereiche ein Befestigen dieser Stäbe an dem mindestens einen Flachriemen erlaubt, wobei eine Verbindung durch Nieten oder ähnliche Befestigungsmittel erfolgt.

In einer Ausführungsform ist das Antriebsmittel für Förderbänder insbesondere ausgebildet als Stabband für Stabbandförderer landwirtschaftlicher Maschinen. Die erfindungsgemäßen Antriebsmittel, beinhaltend den erfindungsgemäßen Flachriemen, weisen eine gute Zugfestigkeit und Langlebigkeit bei hoher Beanspruchung auf. Dies gilt insbesondere, da die Antriebsmittel solche sind mit Flachriemen, die als Endlosriemen eine Riemenlänge von mindestens 3 Metern, wie mindestens 3,5 Metern, insbesondere mindestens 4 Meter aufweisen.

Diese verbesserte Zugfestigkeit und Langlebigkeit ergibt sich insbesondere durch das erfindungsgemäße Rotationsvulkanisationsverfahren, sodass eine abschnittsweise Vulkanisierung und sich daraus ergebende Inhomogenitäten im Riemenkörper vermeiden lassen. Dieses gilt insbesondere auch weil der erfindungsgemäße Antriebsriemen in einer Ausführungsform keine Gewebeeinlage aufweist.

In einer Ausführungsform weisen die Antriebsmittel für Förderbänder, insbesondere ausgebildet als Stabband für Stabbandförderer, Befestigungslöcher für Funktionselemente auf, sodass entsprechend eine Verbindung durch Nieten oder ähnliche Befestigungsmittel der quer zur Laufrichtung angeordneten Stäbe über die gelochten Befestigungsbereiche dieser mit den Befestigungslöchern des Flachriemens erfolgen kann.

Üblicherweise weisen die Antriebsmittel für Förderbänder mindestens 2 erfindungsgemäße Flachriemen auf, wie mindestens 3 erfindungsgemäße Flachriemen, z. B. 4 erfindungsgemäße Flachriemen. Die Anzahl der Flachriemen ergibt sich durch die Kraftbeaufschlagung und Belastung der Flachriemen als Antriebsmittel für die Förderbänder. Diese Antriebsmittel für Förderbänder sind erfindungsgemäß als Antriebsmittel von Förderbändern in Form von Stabelevatoren geeignet. Solche Stabelevatoren dienen in landwirtschaftlichen Maschinen dazu, Erntegut zu fördern und z. B. im Bereich der Heu- und Strohpressung die Ballenform zu verdichten.

Die erfindungsgemäßen Antriebsmittel sind insbesondere entsprechende Stabbänder für Stabbandförderer landwirtschaftlicher Maschinen.

In einem weiteren Aspekt richtet sich die vorliegende Erfindung auf Landwirtschaftsmaschinen mit einer zum Fördern von landwirtschaftlichem Erntegut eingerichteten Fördereinrichtung oder mit einer zum Pressen von landwirtschaftlichem Erntegut eingerichteten Presseinrichtung, wobei die Fördereinrichtung und/oder die Presseinrichtung wenigstens einen erfindungsgemäßen Flachriemen oder ein erfindungsgemäßes Förderband aufweist. In einer Ausführungsform weisen die Landwirtschaftsmaschinen weiterhin eine Antriebseinrichtung mit einem zweiten Kraftschlussprofil auf. Dieses zweite Kraftschlussprofil, das kraftschlüssig eine Antriebskraft auf das erste Kraftschlussprofil eines erfindungsgemäßen Flachriemens des erfindungsgemäßen Antriebsmittels für Förderbänder aufweist. Bei den Landwirtschaftsmaschinen handelt es sich insbesondere um Dreschmaschinen und Pressmaschinen, wie Mähdrescher und Rundballenpressen.

Im Folgenden wird die Erfindung unter Bezugnahme auf die beigefügten Figuren näher erläutert.

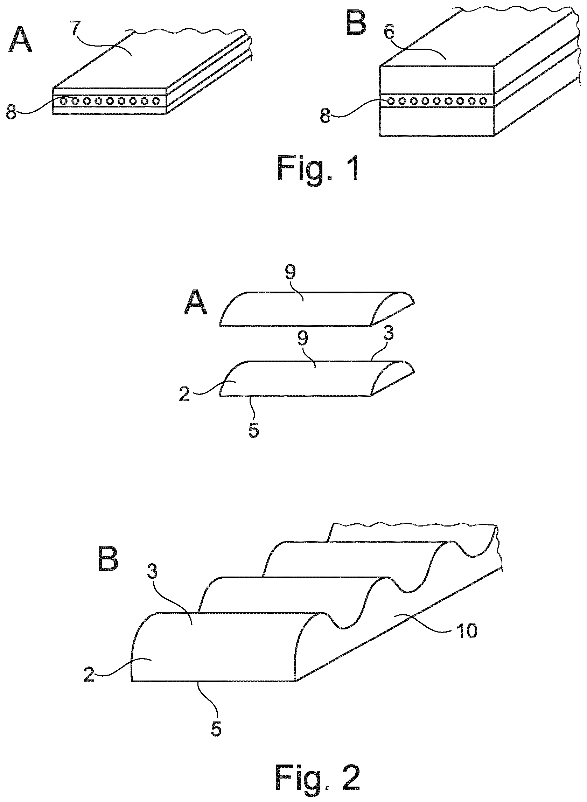

Die Figur 1A zeigt einen flachen Flachriemen 7 mit zu einem Cord 8 ausgebildeten Zugträgern. Auf diesen flachen Flachriemen 7 können dann mit geeigneten materialaufbringenden Verfahren die Profile einzeln oder als Profilkette aufgebracht werden. Entsprechende Profile sind in der Figur 2A und Figur 2B dargestellt.

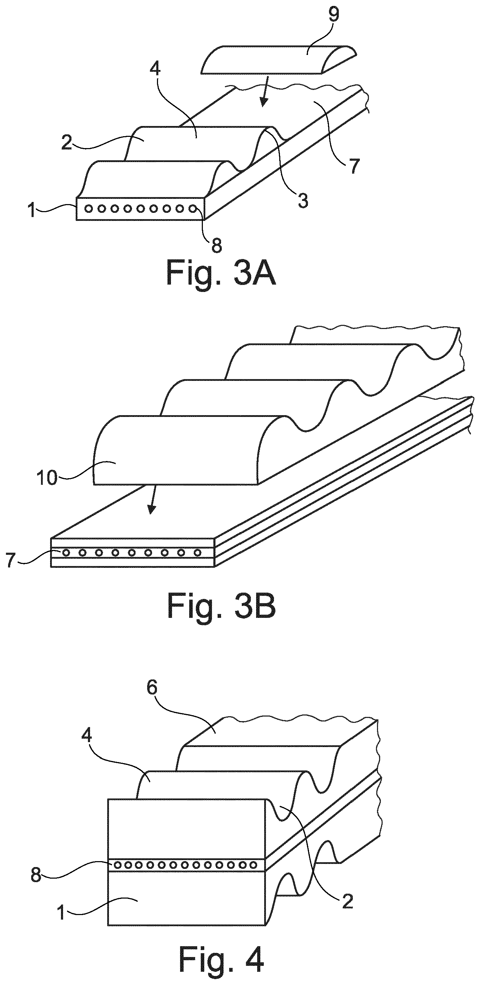

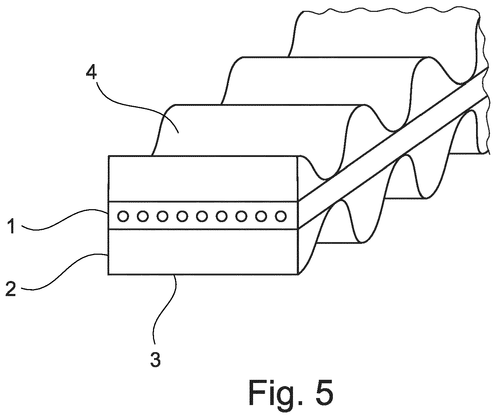

Figur 1B zeigt einen hohen Flachriemen bzw. Vollriemen 6 mit einem mittig angeordneten Cord 8. Dieser Vollriemen ist zur materialabtragenden weiteren Bearbeitung geeignet, insbesondere derart, dass beidseitig ein Profil ausgebildet wird. Entsprechend ausgebildete Profile und Zwischenstufen hiervon sind in den Figuren 4 und 5 unten dargestellt.

Figur 2A zeigt zwei Profilblöcke 9, die gewebeeinlagefrei im Kraftübertragungsbereich 2, im Rücken 5 und der Basis 3 sind. Diese Profilblöcke sind zum Aufliegen auf dem flachen Flachriemen 7 geeignet, wie in der Figur 3 A dargestellt.

Figur 2B zeigt eine Profilkette 10 mit mehreren Zähnen. Dargestellt sind der Rücken, der in einer erfindungsgemäßen Ausführungsform gewebeeinlagefrei vorliegt. Der Kraftübertragungsbereich 2, beispielhaft gezeichnet mit einem Zahn, ist erfindungsgemäß ebenfalls frei von einer Gewebeeinlage. Basis 3 ist in einer Ausführungsform ebenfalls gewebefrei.

**In** der Figur 3A ist ein erfindungsgemäßer flacher Flachriemen 7 dargestellt, auf dem ein Profilblock 9 als Zahn 4 materialauftragend aufgebracht ist. Der erfindungsgemäße Flachriemen 1 zeigt einen Kraftübertragungsbereich 2, der erfindungsgemäß keine Gewebeeinlage aufweist, sowie die Basis 3, die in einer Ausführungsform ebenfalls gewebeeinlagefrei ist.

Die Figur 3 B zeigt den Materialauftrag einer Profilkette 10 auf einen flachen Flachriemen 7.

Figur 4 zeigt einen Zwischenschritt bei der Herstellung eines erfindungsgemäßen Flachriemens auf Basis eines Vollriemens wie in Figur 1B gezeigt. Hierbei wird mit einem materialabtragenden Verfahren, wie Schleifen, Fräsen oder Schneiden, der Zahn 4 aus dem Vollriemen 6 freigelegt. Vorliegend erfolgt eine beidseitige Profilierung des Flachriemens 1, wobei die Zugträger des Cords 8 mittig angeordnet sind. Figur 5 zeigt schließlich einen erfindungsgemäßen Flachriemen mit den mittig angeordneten Zugträgern, Zähnen als Profile, die beidseitig angeordnet sind sowie dem Kraftübertragungsbereich 2 im Bereich des Zahns 4 sowie der Basis 3.

Der erfindungsgemäße Flachriemen kann im Rahmen der nachfolgenden Ansprüche weitere Ausführungsformen bilden, die nicht in den Figuren explizit dargestellt sind.

### Bezugszeichenliste:

- 1 -: Flachriemen
- 2 -: Kraftübertragungsbereich
- 3 -: Basis
- 4 -: Zahn
- 5 -: Rücken
- 6 -: Flachriemen, hoch
- 7 -: Flachriemen, flach
- 8 -: Cord
- 9: Profilblock
- 10: Profilkette

## Patentansprüche

1. Flachriemen als endloses Zugmittel, geeignet für Förderbänder, insbesondere in landwirtschaftlichen Maschinen, wobei der Flachriemen als Endlosriemen eine Riemenlänge von mindestens 3 m, wie mindestens 3,5 m, insbesondere mindestens 4 m aufweist, wobei der Flachriemen einen Grundkörper hat und dieser Grundkörper ein Endloszugträgerelement, ausgebildet aus einer Vielzahl von in Laufrichtung des Flachriemens zugkraftübertragenden Zugträger aufweist, **dadurch gekennzeichnet, dass** der Flachriemen keine Gewebeeinlage im Kraftübertragungsbereich hat, i) wobei mindestens ein Teil des Kraftübertragungsbereiches des Flachriemens nach Vulkanisierung des Grundkörpers durch Aufvulkanisierung oder Aufkleben von in getrennten Verfahren hergestellter Riemenverzahnung vorliegt oder ii) wobei mindestens ein Teil des Kraftübertragungsbereiches des Flachriemens nach Vulkanisierung durch ein Material abtragendes Verfahren aus dem vulkanisierten Grundkörper ausgebildet wird.

2. Flachriemen nach Anspruch 1, wobei die Zugträger ausgebildet sind aus Polyamid, Polyester, Aramid, Carbon, Glas und/oder Stahl.

3. Flachriemen nach Anspruch 1 oder 2, wobei der Grundkörper besteht oder umfasst Naturkautschuk, Chloropren-Kautschuk,Styrol-Butadien-Kautschuk, Ethylen-Propylenterpolymer(dien)-Kautschuk, alkyliertes chlorsulfoniertes Polyethylen oder hydrierter Acrylnitrilbutadien-Kautschuk.

4. Flachriemen nach einem der vorherigen Ansprüche, wobei der Flachriemen als Keilriemen ausgebildet ist.

5. Flachriemen nach einem der vorherigen Ansprüche, wobei keine Gewebeeinlage im Rücken des Riemens aufweist und/oder gegebenenfalls keine Gewebeeinlage in der Basis aufweist.

6. Flachriemen nach einem der Ansprüche 1 bis 5, weiterhin aufweisend Befestigungslöcher für Funktionselemente.

7. Verfahren zum Herstellen eines Flachriemens nach einem der Ansprüche 1 bis 6, umfassend ein mehrstufiges Verfahren mit den Schritten
a) des Ausbildens eines Flachriemens mit einem Grundkörper und darin vorliegenden Endloszugträgerelements mittels Rotationsvulkanisationsverfahrens;
b) Ausformen zumindest eines Teils des Kraftübertragungsbereiches an dem durch Rotationsvulkanisationsverfahren gemäß Schritt a) erhaltenen Flachriemen.

8. Verfahren zur Herstellung eines Flachriemens nach Anspruch 7, wobei der Kraftübertragungsbereich hergestellt wird durch mindestens teilweise Ausformen eines ersten Kraftschlussprofils.

9. Verfahren nach Anspruch 8, wobei das erste Kraftschlussprofil eines ist zum Aufnehmen der Antriebskraft einer Antriebseinrichtung, wobei diese Antriebseinrichtung ein zweites Kraftschlussprofil aufweist, das zum kraftschlüssigen Ausüben der Antriebskraft auf das erste Kraftschlussprofil eingerichtet ist.

10. Verfahren nach Anspruch 7 oder 8, wobei im Schritt b) das Ausformen eines ersten Kraftschlussprofils des Kraftübertragungsbereichs ein ein Material abtragendes Verfahren des Vulkanisats ist.

11. Verfahren nach Anspruch 7 oder 8, wobei im Schritt b) das Ausformen des ersten Kraftschlussprofils durch Aufvulkanisation oder Aufkleben von einem in einem separaten Prozess hergestellten Vulkanisats, z.B. in Form einer Riemenverzahnung, im Bereich des zu erzeugenden Kraftübertragungsbereichs erfolgt.

12. Verfahren nach einem der Ansprüche 7 bis 11, wobei der im Schritt a) erhaltene Flachriemen die Endhöhe des Flachriemens aufweist.

13. Antriebsmittel für Förderbänder umfassend mindestens einen Flachriemen nach einem der Ansprüche 1 bis 6, insbesondere ausgebildet als Stabband für Stabbandförderer landwirtschaftlicher Maschinen, aufweisend mindestens einen Flachriemen nach einem der Ansprüche 1 bis 6 und quer zur Laufrichtung des mindestens einen Flachriemen parallel zueinander angeordnet Stäbe mit gelochten Befestigungsbereichen, wobei diese Befestigungsbereiche ein Befestigen dieser Stäbe an einen oder mehrere Flachriemen erlaubt, insbesondere über die Befestigungslöcher für Funktionselemente, und eine Verbindung durch Nieten oder ähnliche Befestigungsmittel erfolgt.

14. Antriebsmittel für Förderbänder nach Anspruch 13 umfassend mindestens zwei Flachriemen nach einem der Ansprüche 1 bis 6.

15. Landwirtschaftsmaschine mit einer zum Fördern von landwirtschaftlichem Erntegut eingerichteten Fördereinrichtung oder mit einer zum Pressen von landwirtschaftlichem Erntegut eingerichteten Presseinrichtung, wobei die Fördereinrichtung und/oder die Presseinrichtung wenigstens einen Flachriemen nach einem der Ansprüche 1 bis 6 oder ein Förderband nach einem der Ansprüche 13 bis 14 aufweist.

16. Landwirtschaftsmaschine nach Anspruch 15 weiterhin aufweisend eine Antriebseinrichtung mit einem zweiten Kraftschlussprofil, das Kraftschlüssig eine Antriebskraft auf das erste Kraftschlussprofil eines Flachriemens nach einem der Ansprüche 1 bis 6 oder des Antriebmittels für Förderbänder nach einem der Ansprüche 13 oder 14 aufweist.

## Claims

1. Flat belt as an endless traction means, suitable for conveyor belts, in particular in agricultural machines, wherein the flat belt has, as an endless belt, a belt length of at least 3 m, for instance at least 3.5 m, in particular at least 4 m, wherein the flat belt has a main body and this main body has an endless tension member element, formed from a multiplicity of tension members transmitting tensile force in the running direction of the flat belt, **characterized in that** the flat belt has no fabric insert, i) wherein at least a part of the force transmission region of the flat belt, following vulcanization of the main body, arises by application, by vulcanization or adhesive bonding, of a belt toothing produced in separate methods or ii) wherein at least a part of the force transmission region of the flat belt, following vulcanization, is formed from the vulcanized main body by a material-removing method.

2. Flat belt according to claim 1, wherein the tension members are formed from polyamide, polyester, aramid, carbon, glass and/or steel.

3. Flat belt according to claim 1 or 2, wherein the main body consists of or comprises natural rubber, chloroprene rubber, styrene-butadiene rubber, ethylene propylene diene terpolymer rubber, alkylated chlorosulfonated polyethylene or hydrated acrylonitrile butadiene rubber.

4. Flat belt according to one of the preceding claims, wherein the flat belt is in the form of a V belt.

5. Flat belt according to one of the preceding claims, wherein no fabric insert in the back of the belt is present and/or optionally no fabric insert in the base is present.

6. Flat belt according to one of claims 1 to 5, also having fastening holes for functional elements.

7. Method for producing a flat belt according to any one of claims 1 to 6, comprising a multistage method having the steps of
a) forming a flat belt with a main body and an endless tension member element, present therein, by means of a rotary vulcanization process;
b) forming at least a part of the force transmission region on the flat belt obtained by the rotary vulcanization process according to step a).

8. Method for producing a flat belt according to claim 7, wherein the force transmission region is produced by at least partially forming a first traction profile.

9. Method according to claim 8, wherein the first traction profile is one for absorbing the driving force of a drive device, wherein this drive device has a second traction profile that is designed for the non-positive exertion of the driving force on the first traction profile.

10. Method according to claim 7 or 8, wherein, in step b), the forming of a first traction profile of the force transmission region is a process in which material of the vulcanizate is removed.

11. Method according to claim 7 or 8, wherein, in step b), the forming of the first traction profile takes place by application of a vulcanizate, produced in a separate process, for example in the form of a belt toothing, by vulcanization or adhesive bonding in the region of the force transmission region to be created.

12. Method according to one of claims 8 to 11, wherein the flat belt obtained in step a) has the final height of the flat belt.

13. Drive means for conveyor belts comprising at least one flat belt according to one of claims 1 to 6, in particular in the form of a rod belt for rod belt conveyors of agricultural machines, having at least one flat belt according to one of claims 1 to 6 and rods, arranged parallel to one another transversely to the running direction of the at least one flat belt, with punched fastening regions, wherein these fastening regions allow these rods to be fastened to one or more flat belts, in particular via the fastening holes for functional elements, and connection takes place by way of rivets or similar fastening means.

14. Drive means for conveyor belts according to claim 13, comprising at least two flat belts according to one of claims 1 to 6.

15. Agricultural machine having a conveying device designed to convey agricultural harvested material or having a pressing device designed to press agricultural harvested material, wherein the conveying device and/or the pressing device has at least one flat belt according to one of claims 1 to 6 or a conveyor belt according to either of claims 13 and 14.

16. Agricultural machine according to claim 15, also having a drive device with a second traction profile, which has a driving force in a non-positive manner on the first traction profile of a flat belt according to one of claims 1 to 6 or of the drive means for conveyor belts according to either of claims 13 and 14.

## Revendications

1. Courroie plate faisant office de dispositif de traction sans fin, adaptée aux bandes transporteuses, en particulier dans des machines agricoles, dans laquelle
la courroie plate faisant office de courroie sans fin présente une longueur d'au moins 3 m, par exemple d'au moins 3,5 m, en particulier d'au moins 4 m,
la courroie plate comprend un corps de base et ledit corps de base comprend un élément porteur de traction sans fin formé d'une pluralité de supports de traction transmettant la force de traction dans le sens de défilement de la courroie plate,
**caractérisée en ce que** la courroie plate ne comprend pas de garniture de tissu dans la zone de transmission de force, et, i) au moins une partie de la zone de transmission de force de la courroie plate se présente sous la forme d'une denture de courroie réalisée, après vulcanisation du corps de base, par vulcanisation ou collage sur celui-ci, dans des procédés séparés, ou, ii) au moins une partie de la zone de transmission de force de la courroie plate est réalisée, après vulcanisation, par un procédé d'enlèvement de matière à partir du corps de base vulcanisé.

2. Courroie plate selon la revendication 1,
dans laquelle les supports de traction sont réalisés en polyamide, polyester, aramide, carbone, verre et/ou acier.

3. Courroie plate selon la revendication 1 ou 2,
dans laquelle le corps de base est constitué ou comprend du caoutchouc naturel, du caoutchouc chloroprène, du caoutchouc styrène-butadiène, du caoutchouc terpolymère d'éthylène-propylène-diène, du polyéthylène chlorosulfoné alkylé ou du caoutchouc butadiène-acrylonitrile hydrogéné.

4. Courroie plate selon l'une des revendications précédentes,
dans laquelle la courroie plate est conçue comme une courroie trapézoïdale.

5. Courroie plate selon l'une des revendications précédentes,
dans laquelle la courroie plate ne comprend pas de garniture de tissu sur le dos et/ou, le cas échéant, ne comprend pas de garniture de tissu dans la base.

6. Courroie plate selon l'une des revendications 1 à 5,
comprenant en outre des trous de fixation pour des éléments fonctionnels.

7. Procédé de fabrication d'une courroie plate selon l'une des revendications 1 à 6, comprenant un procédé en plusieurs étapes qui comprend les étapes consistant à :
a) réaliser une courroie plate avec un corps de base et, à l'intérieur de celui-ci, un élément porteur de traction sans fin, par un procédé de vulcanisation en rotation ;
b) former au moins une partie de la zone de transmission de force sur la courroie plate obtenue par vulcanisation en rotation selon l'étape a).

8. Procédé de fabrication d'une courroie plate selon la revendication 7, dans lequel la zone de transmission de force est réalisée par formage au moins partiel d'un premier profilé de liaison par adhérence.

9. Procédé selon la revendication 8,
dans lequel le premier profilé de liaison par adhérence est destiné à encaisser la force d'entraînement d'un dispositif d'entraînement, ledit dispositif d'entraînement possédant un deuxième profilé de liaison par adhérence conçu pour exercer par adhérence la force d'entraînement sur le premier profilé de liaison par adhérence.

10. Procédé selon la revendication 7 ou 8,
dans lequel, à l'étape b), le formage d'un premier profilé de liaison par adhérence de la zone de transmission de force est un procédé d'enlèvement de matière dans le produit vulcanisé.

11. Procédé selon la revendication 7 ou 8,
dans lequel, à l'étape b), le formage du premier profilé de liaison par adhérence est réalisé par vulcanisation ou collage d'un produit vulcanisé, réalisé dans un processus séparé, par exemple sous la forme d'une denture de courroie, au niveau de la zone de transmission de force à créer.

12. Procédé selon l'une des revendications 7 à 11,
dans lequel la courroie plate obtenue à l'étape a) présente la hauteur finale de la courroie plate.

13. Moyen d'entraînement pour bandes transporteuses, comprenant au moins une courroie plate selon l'une des revendications 1 à 6, conçu en particulier comme une courroie à barres pour convoyeurs à barres de machines agricoles, comprenant au moins une courroie plate selon l'une des revendications 1 à 6 et des barres disposées parallèlement les unes aux autres, transversalement au sens de défilement de ladite au moins une courroie plate, lesdites barres présentant des zones de fixation perforées, lesdites zones de fixation permettant la fixation de ces barres à une ou plusieurs courroies plates, en particulier par l'intermédiaire des trous de fixation pour des éléments fonctionnels, la liaison étant établie par des rivets ou par des moyens de fixation similaires.

14. Moyen d'entraînement pour bandes transporteuses selon la revendication 13, comprenant au moins deux courroies plates selon l'une des revendications 1 à 6.

15. Machine agricole équipée d'un dispositif de transport, conçu pour transporter des produits agricoles récoltés, ou d'un dispositif de pressage, conçu pour presser des produits agricoles récoltés, le dispositif de transport et/ou le dispositif de pressage comprenant au moins une courroie plate selon l'une des revendications 1 à 6 ou une bande transporteuse selon l'une des revendications 13 à 14.

16. Machine agricole selon la revendication 15, comprenant en outre un dispositif d'entraînement doté d'un deuxième profilé de liaison par adhérence, qui exerce par adhérence une force d'entraînement sur le premier profilé de liaison par adhérence d'une courroie plate selon l'une des revendications 1 à 6 ou du moyen d'entraînement pour bandes transporteuses selon l'une des revendications 13 ou 14.
